# EUROPEAN PATENT APPLICATION

(11) **EP 3 467 757 A1**
(43) Date of publication of application: **10.04.2019**
(21) Application number: 18196302.6
(22) Date of filing: 24.09.2018
(51) Int. Cl.: G06Q 30/06

(54) **METHOD AND ELECTRONIC DEVICE FOR CREATING A CUSTOMIZED OBJECT**

(30) Priority: 05.10.2017 TW 10634390
(71) Applicant: Customized Technology Co., Ltd, 407 Taichung City (TW)
(72) Inventor: LIAO, Ya-Hui, 428 Taichung City (TW)
(74) Representative: Burton, Nick

(57) **Abstract**

A method for creating a customized object is implemented using an electronic device (3) communicating (2) with a server. The method includes: displaying an edit page that includes a type selection list that displays a number of object types each having a specific shape, a design element list that displays a number of available design elements, and an edit area; in response to a user selection of a selected object type, displaying an object image corresponding to the selected object type in the edit area, allowing a user to create a customized image by editing the object image; and in response to a command indicating that editing of the object image has been completed, transmitting data regarding the customized image to the server (2).

## Description

The disclosure relates to a method and an electronic device for creating a customized object.

Taiwanese Patent Application Publication No. 200733908 discloses a system and a method for providing customized footwear to a consumer. Taiwanese Patent Application Publication No. 200701899 discloses a method and an apparatus for apparel customization (e.g., to customize and design an appearance and/or a shape of the apparel). After a customer completes customization of an apparel, a producer is enabled to produce the customized apparel for the user.

One object of the disclosure is to provide a method for allowing a user to edit a customized object that can be produced relatively easily.

According to one embodiment of the disclosure, the method is for creating a customized object to be implemented using an electronic device communicating with a server. The method includes steps of:
displaying an edit page, the edit page including a type selection list that displays a number of different object types of an object to be customized, a design element list that displays a number of available design elements, and an edit area, each of the object types having a specific shape;
in response to a user selection of a selected one of the object types, displaying an object image corresponding to the selected one of the object types in the edit area for allowing a user to create a customized image by editing the object image; and

in response to a user command indicating that editing of the object image has been completed, transmitting data regarding the customized image to the server.

According to one embodiment of the disclosure, the method is for creating a customized object to be implemented using a server communicating with an electronic device. The method includes steps of:
transmitting data to the electronic device for enabling the electronic device to display an edit page, the edit page including a type selection list that displays a number of different object types of an object to be customized, a design element list that displays a number of available design elements, and an edit area, each of the object types having a specific shape;
in response to a user selection of a selected one of the object types, transmitting data to the electronic device for enabling the electronic device to display an object image corresponding to the selected one of the object types in the edit area for allowing a user to create a customized image by editing the object image;
receiving data regarding the customized image from the electronic device; and
generating an order for requiring production of the object of the selected one of the object types based on the customized image, wherein the order requires producing the object of the selected one of the object types by producing a main body having the specific shape, and an attachment body having a pattern thereon representing the customized image and being attached to the main body.

Another object of the disclosure is to provide an electronic device that is capable of implementing the above-mentioned method.

According to one embodiment of the disclosure, the electronic device is for creating a customized object. The electronic device includes a processor, a display and a communication unit communicating with a server, wherein the processor:
controls the display to display an edit page, the edit page including a type selection list that displays a number of different object types of an object to be customized, a design element list that displays a number of available design elements, and an edit area, each of the object types having a specific shape;
in response to a user selection of a selected one of the object types, controls the display to display an object image corresponding to the selected one of the object types in the edit area for allowing a user to create a customized image by editing the object image; and
in response to a user command indicating that editing of the object image has been completed, controls the communication unit to transmit data regarding the customized image to the server.

Other features and advantages of the disclosure will become apparent in the following detailed description of the embodiments with reference to the accompanying drawings, of which:
Figure 1 is a schematic diagram illustrating an exemplary object that can be customized;
Figure 2 is a schematic diagram illustrating a main body of the object with an attachment body attached thereto;
Figure 3 is a sectional view illustrating the main body with the attachment body attached thereto;
Figure 4 is a schematic diagram illustrating a server that is able to communicate with a number of different electronic devices;
Figure 5 is a block diagram illustrating the server and one electronic device;
Figure 6 is a schematic diagram illustrating an exemplary edit page that may be displayed by the electronic device according to one embodiment of the disclosure;
Figure 7 is a flow chart illustrating steps of a method for creating a customized object according to one embodiment of the disclosure; and
Figure 8 is a flow chart illustrating steps of a re-edit process for re-editing a customized image according to one embodiment of the disclosure.

Before the disclosure is described in greater detail, it should be noted that where considered appropriate, reference numerals or terminal portions of reference numerals have been repeated among the figures to indicate corresponding or analogous elements, which may optionally have similar characteristics.

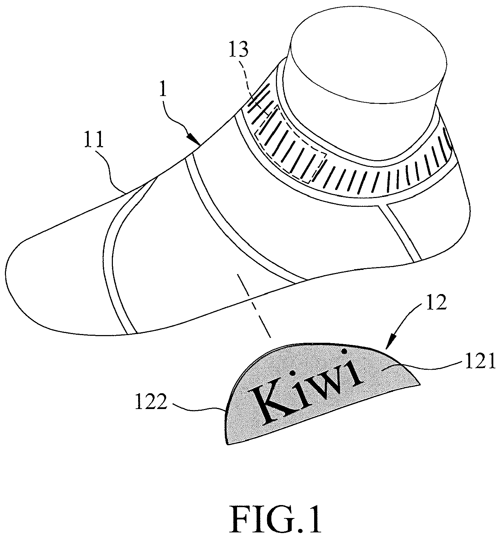

Figure 1 is a schematic diagram illustrating an object 1 that can be customized. In various embodiments, the object 1 may be a garment (e.g., clothes, pants, etc.), a footwear (a pair of shoes, socks, etc.), or an accessory (e.g., a handbag) . In this embodiment, the object 1 is a shoe that includes a main body 11 and an attachment body 12. In some embodiments, the object 1 may further include one or more electronic sensors 13.

The main body 11 may be made using a number of materials such as stretch fabric, flexible textile, leather, artificial leather, plastic, rubber, foaming material, etc. The stretch fabric may be woven fabric, knitted fabric, non-woven fabric, air mesh fabric, sandwich mesh fabric, etc. The main body 11 may be built integrally as one piece, or assembled from a plurality of parts 111, each being made from one of the materials mentioned above.

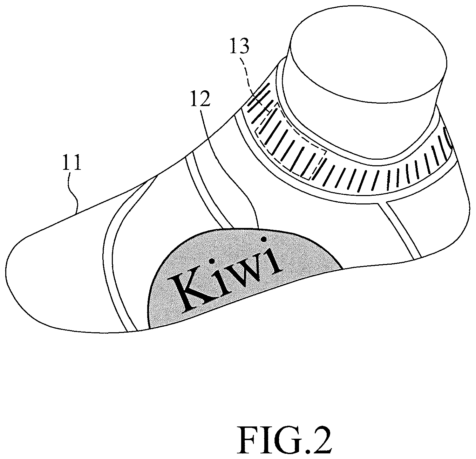

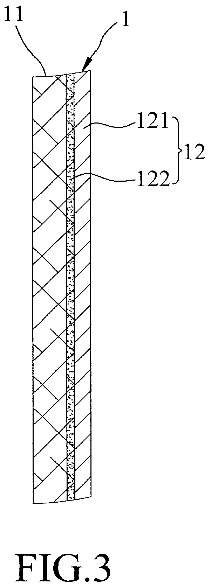

Further referring to Figures 2 and 3, the attachment body 12 is attached to the main body 11. Specifically, the attachment body 12 may include a base layer 121 that has a graphic and/or text on one surface thereof. For example, the graphic and/or text may be formed by imprinting or embroidery. The graphic and/or text may be imprinted using a printing process such as heat transfer printing, vacuum transfer printing, etc. The attachment body 12 may be attached to the main body 11 using sewing, heat pressing rivets, hook and loop fasteners, buttons, etc.

In some embodiments, the attachment body 12 further includes an adhesive layer 122 formed on the base layer 121 opposite to the one surface having the graphic and/or text, so as to allow the base layer 121 of the attachment body 12 to be attached to the main body 11. For example, the adhesive layer 122 is made of an adhesive material that can infiltrate the material of the main body 11, thereby securing the combination between the main body 11 and the attachment body 12.

The electronic sensor (s) 13 may be installed in the main body 11 and/or the attachment body 12, and may include components for detecting information regarding a user and/or environment around the object 1. For example, the electronic sensor 13 may be installed at a location where, when worn by the user, the electronic sensor 13 is capable of detecting biometric information of the user (e.g., heart rate, body temperature, etc.) and to detect usage information of the object 1, such as a period during which the user wears the object 1. Additionally, the electronic sensor(s) 13 may further include components for detecting environment information, such as a global positioning system sensor for detecting a geographic location of the object 1, a temperature/humidity sensor module for detecting temperature/moisture of the location, an altimeter for measuring altitude of the location, etc.

In some embodiments, the object 1 may further include a communication unit that is capable of outputting the information detected by the electronic sensor(s) 13. For example, the communication unit may include a connection port to enable a wired connection to an electronic device, and/or may include a wireless communication component to wirelessly transmit the information to the electronic device using a wireless communication technique such as Bluetooth®, WiFi, radio frequency identification (RFID), etc.

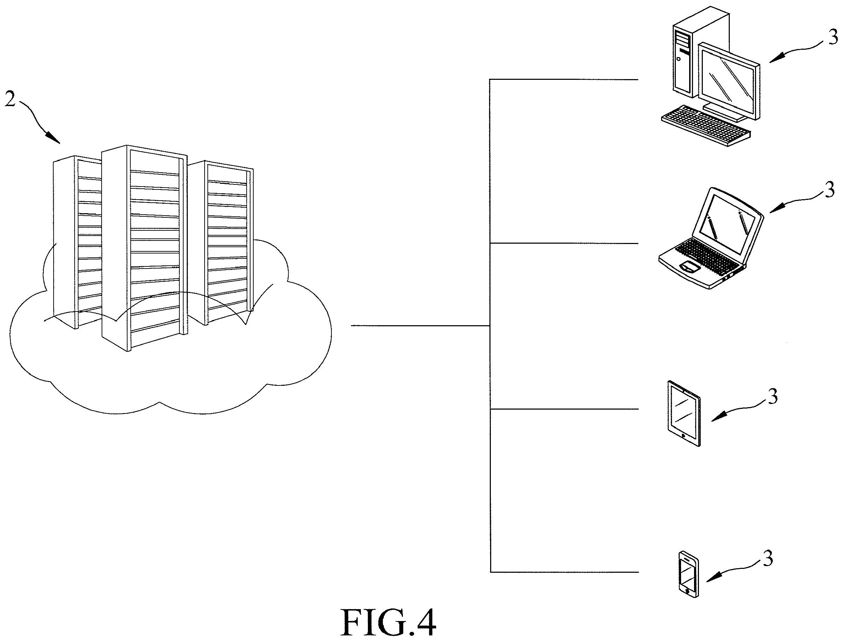

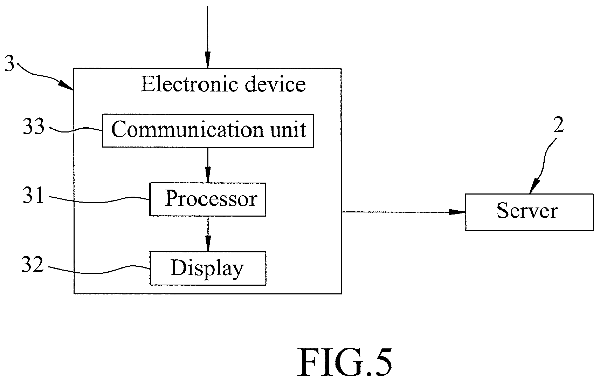

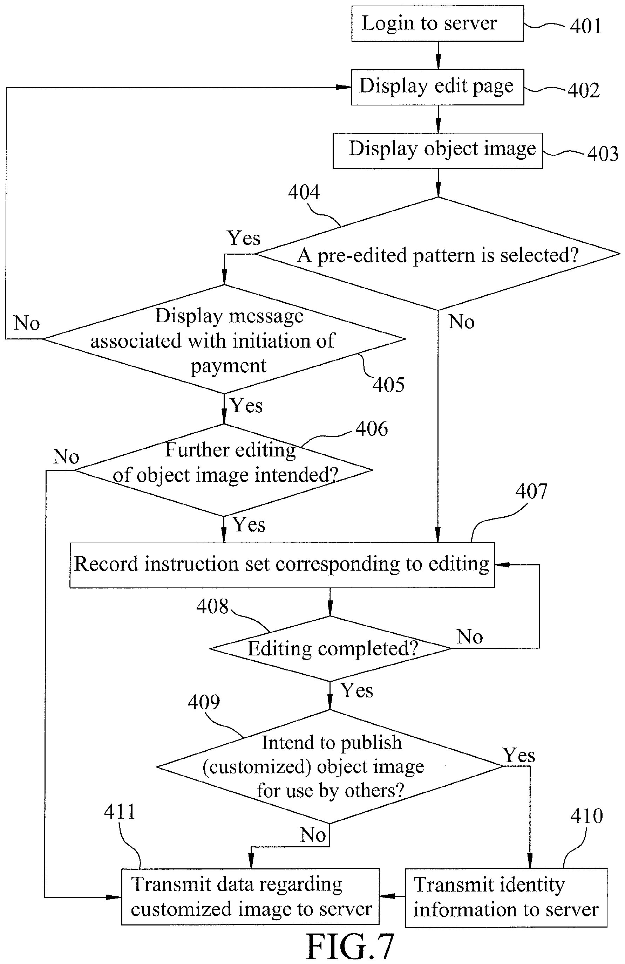

Figure 7 is a flow chart illustrating steps of a method for creating a customized object according to one embodiment of the disclosure. In this embodiment, the method is implemented using an electronic device 3 communicating with a server 2 (see Figure 4). The electronic device 3 may be embodied using a personal computer (PC), a laptop, a tablet, a mobile phone, etc. Referring to Figure 5, the electronic device 3 includes a processor 31 for executing an application, a display 32, and a communication unit 33 for communicating with the server 2 via a network such as the Internet.

When a user of the electronic device 3 intends to create a customized object, he/she may operate the electronic device 3 to execute the application or to access a website so as to communicate with the server 2.

Accordingly, in step 401, the electronic device 3 transmits authentication information to the server 2, so as to login to the server 2. In this embodiment, the authentication information may include a username and a password that are pre-stored in the electronic device 3 or that are inputted by the user.

After the login is completed, in step 402, the electronic device 3 displays an edit page for allowing the user to create a customized object. Data constituting the edit page may be stored in the server 2 and transmitted to the electronic device 3, or pre-stored in the electronic device 3.

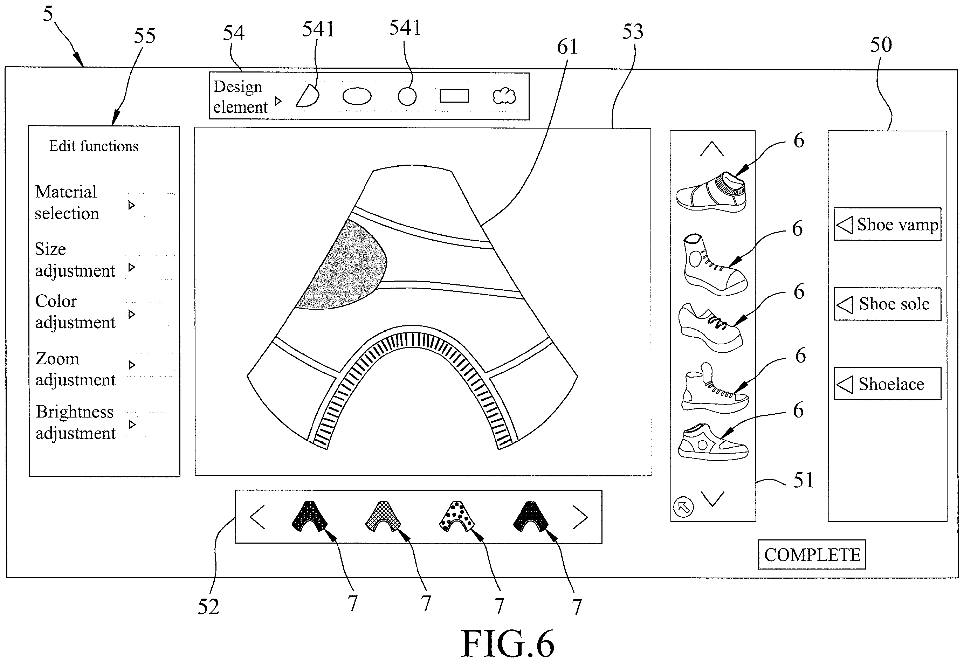

Figure 6 is an exemplary edit page 5 that may be displayed by the display 32 of the electronic 3, according to one embodiment of the disclosure. The edit page 5 includes a component selection list 50, a type selection list 51, a pattern selection list 52, an edit area 53, a design element list 54 and an editing pad 55. The component selection list 50 includes components that constitute the customized object. For example, when the customized object is a shoe, the components may include a shoe vamp, a shoe sole, a shoelace, etc. The type selection list 51 includes one or more different object types 6 of the customized object, and each object type 6 has a specific shape. For example, in a case of the customized object being a shoe, the object types 6 may include different types of shoes, such as athletic shoes, canvas shoes, casual shoes, oxford shoes, boots, etc. The pattern selection list 52 includes a number of preset patterns 7. The design element list 54 displays a number of available design elements 541. In one embodiment, the available design elements 541 may include different texts, graphics, etc. The edit pad 55 displays one or more available functions for editing, such as selection of material, size, color, zoom in/out, brightness, etc.

In response to a user selection of a selected one of the object types 6 in the type selection list 51, in step 403, the processor 31 controls the display 32 to display an object image 61 corresponding to the selected one of the object types 6 in the edit area 53 for allowing a user to create a customized image by editing the object image 61. In addition to the functions listed in the edit pad 55, the user may further employ other editing functions such as drawing, pasting, rotating, moving, adding effects, etc., for editing the object image 61.

The user may also select one of the preset patterns 7 that are applicable to the object image 61. In this embodiment, the preset patterns 7 include a default pattern and/or a pre-edited pattern. The pre-edited pattern was created by an outside party (e.g., through a similar editing procedure) . In some embodiments, the preset patterns 7 may include more than one default patterns and/or more than one pre-edited pattern. Upon selection of any of the preset patterns 7, the selected preset pattern 7 is applied to the object image 61 displayed by the display 32.

In step 404, the processor 31 determines whether the pre-edited pattern is selected from among the preset patterns 7. In this embodiment, the pre-edited pattern displayed on the pattern selection list 52 may include a specific attachment file having identity information of the outside party (e.g., another user) that created the pre-edited pattern.

When it is determined that the pre-edited pattern is selected, the flow proceeds to step 405. Otherwise, the flow proceeds to step 407.

In step 405, the processor 31 controls the display 32 to display a message associated with initiation of a payment to the outside party for using the pre-edited pattern, and instructs the user to input a response as to whether to authorize the payment.

When it is determined from the response that the user agrees to the payment, the flow proceeds to step 406. Otherwise, the flow goes back to step 402.

In step 406, the processor 31 controls the display 32 to display a message asking whether the user intends to further edit the object image 61. When the user inputs a response indicating that the user intends to further edit the object image 61, the flow proceeds to step 407. Otherwise, the flow goes directly to step 411 and steps 407-410 are skipped.

In step 407, the user is allowed to continue editing, which are reflected in the object image 61 displayed by the display 32, and for a specific editing action (e.g., drawing, pasting, etc.), the processor 31 records a corresponding instruction in a program language (e.g., java script, java, swift, objective C, etc.). Accordingly, when a series of editing actions are performed, a corresponding instruction set will be recorded.

When the user decides that the editing of the object image 61 has been completed, he/she may input a user command. This may be done, for example, by the user clicking a "complete" button displayed on the display 32. The processor 31 determines, in step 408, whether the user command indicating that editing of the object image has been completed is received. In response to receipt of the user command, the processor 31 may save the object image 61 as a customized image, and the flow proceeds to step 409. Otherwise, the flow goes back to step 407 for continuously recording the instruction (s) associated with the editing of the object image 61. It is noted that after editing of one specific component of the object 1 (e.g., the shoe vamp) is completed, the user may switch to another one of the components (e.g., the shoelace) to perform editing on said another one of the components.

In step 409, the processor 31 controls the display 32 to display a message asking whether the user intends to publish the customized image for use by other parties . When the user intends to publish the customized image, the user may input identity information of himself/herself, and then the processor 31 controls the communication unit 33 to transmit the identity information to the server 2 in step 410. Subsequently, in step 411, the processor 31 controls the communication unit 33 to further transmit data regarding the customized image to the server 2. If the user does not intend to publish the customized image and transmit the identity information, the flow may proceed directly to step 411 and step 410 is skipped.

It is noted that in this embodiment, the data regarding the customized image that is transmitted to the server 2 may include an identification code of the selected one of the object types 6, and the instruction set associated with the editing of the object image 61. In this form, a size of the data transmitted may be minimized since the server 2 may be capable of reconstructing the customized image using the identification code of the selected one of the object types 6 and the instruction set. Specifically, the server 2 reconstructs the customized image by reading image data of the selected one of the object types 6 based on the identification code, producing a corresponding image that is identical to an image of the selected one of the object types 6 based on the image data, and applying the editing of the object image on the corresponding image based on the instruction set. In other embodiment, the electronic device 3 may transmit complete image data that represent the customized image instead.

After receiving (or reproducing) the customized image, the server 2 is then able to produce (manufacture) the object 1 of the selected one of the object types 6 based on the customized image. In use, the user may transmit an order to the server 2 for requiring production of an object (e.g., the object 1 in Figure 1) of the selected one of the object types 6 based on the customized image. In response to the order, the production of the object 1 of the selected one of the object types 6 may be done by producing the main body 11 and the attachment body 12 that constitute the object 1. The main body 11 has the specific shape of the selected one of the object types 6, and the attachment body 12 has a pattern thereon representing the customized image and is attached to the main body 11.

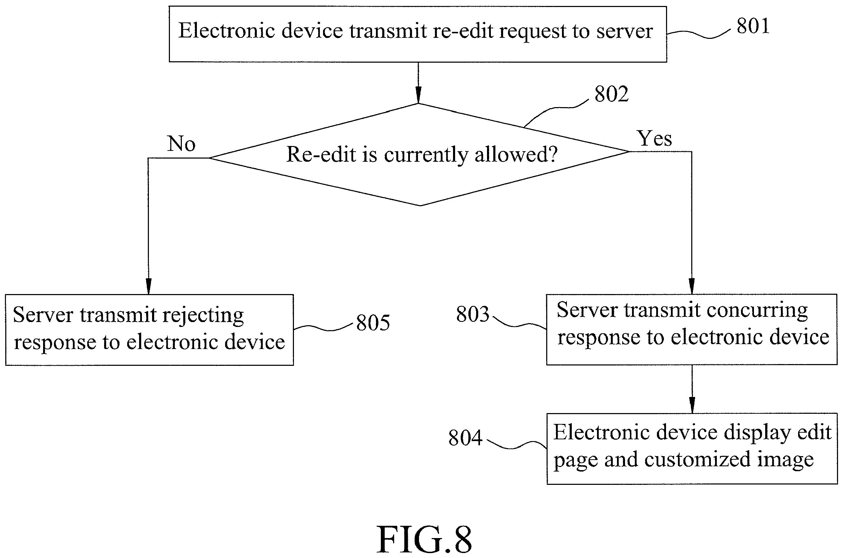

Referring to Figure 8, in the method according to some embodiments, after the order is transmitted, the server 2 may allow the user to initiate a re-edit process for re-editing the customized image. In use, the user may operate the electronic device 3 to transmit a re-edit request to the server 2 in step 801.

In response, in step 802, the server 2 determines whether re-edit is currently allowed. When it is determined that re-edit is currently allowed, the server 2 transmits a concurring response to the electronic device 3 in step 803, enabling the electronic device 3 to display the edit page 5 and the customized image in step 804, wherein the customized image is displayed in the edit area 53. Otherwise (e.g., when the production of the object 1 has already begun), the server 2 transmits a rejecting response to the electronic device 3 in step 805. In some embodiments, the flow goes back to step 406 for re-editing the customized image.

To sum up, embodiments of the disclosure provide a method for allowing the user to create a customized object, which can be produced by a party associated with the server 2. It is worth noting that since the main body 11 is designated to have one of a number of preset shapes, and the attachment body 12, which includes the desired pattern and/or graphic(s)/text(s) represented by the customized image, is attached to the main body 11, the production of the main body 11 can be made relatively easy and low in cost since no additional molding for the main body 11 is now involved. Additionally, there is also provided a convenient way for the user to re-edit the customized image before the customized object is being produced.

In one embodiment, the disclosure relates to a method for creating a customized object implemented using a server communicating with an electronic device. The method includes: displaying an edit page, the edit page including a type selection list that displays a number of different object types of an object to be customized, a design element list that displays a number of available design elements, and an edit area, each of the object types having a specific shape;

in response to a user selection of a selected one of the object types, displaying an object image corresponding to the selected one of the object types in the edit area for allowing a user to create a customized image by editing the object image; and
in response to a user command indicating that editing of the object image has been completed, transmitting data regarding the customized image to the server.

In a further embodiment, the disclosure relates to the preceding embodiments of method, wherein, the edit page further includes a pattern selection list including a number of patterns that are applicable to the object image, and the patterns includes one of a default pattern and a pre-edited pattern that is created by an outside party.

In a further embodiment, the disclosure relates to at least one of the preceding embodiments of method, wherein the edit page further includes a component selection list that includes a number of components that constitute the object.

In a further embodiment, the disclosure relates to at least one of the preceding embodiments of method, wherein the method further includes a step of: in response to the user selection of the pre-edited object, displaying a message associated with initiation of a payment to the outside party.

In a further embodiment, the disclosure relates to at least one of the preceding embodiments of method, wherein the method further includes a step of displaying a message for inquiring whether the user intends to publish the customized image for use by other parties.

In a further embodiment, the disclosure relates to at least one of the preceding embodiments of method, wherein the server generates an order for requiring production of the object of the selected one of the object types based on the customized image.

In a further embodiment, the disclosure relates to at least one of the preceding embodiments of method, wherein the order requires producing the object of the selected one of the object types by producing a main body having the specific shape, and an attachment body having a pattern thereon representing the customized image and being attached to the main body.

In a further embodiment, the disclosure relates to at least one of the preceding embodiments of method, wherein the method further includes a step of recording an instruction set associated with the editing of the object image and an identification code of the selected one of the object types; and
wherein the data regarding the customized image includes the instruction set and the identification code, so as to allow the server to reconstruct the customized image by reading image data of the selected one of the object types based on the identification code, producing a corresponding image that is identical to an image of the selected one of the object types based on the image data, and applying the editing of the object image on the corresponding image based on the instruction set.

In a further embodiment, the disclosure relates to at least one of the preceding embodiments of method, wherein the data regarding the customized image includes image data that represent the customized image.

In a further embodiment, the disclosure relates to at least one of the preceding embodiments of method, wherein the method further includes, after the step of transmitting data regarding the customized image to the server, steps of:
in response to user operation of a re-edit request for editing the customized image, transmitting the re-edit request to the server; and
in response to a concurring response from the server, displaying the edit page and the customized image, wherein the customized image is displayed in the edit area.

In an embodiment, the disclosure relates to a method for creating a customized object to be implemented using a server communicating with an electronic device, the method including steps of:
transmitting data to the electronic device for enabling the electronic device to display an edit page, the edit page including a type selection list that displays a number of different object types of an object to be customized, a design element list that displays a number of available design elements, and an edit area, each of the object types having a specific shape;
in response to a user selection of a selected one of the object types, transmitting data to the electronic device for enabling the electronic device to display an object image corresponding to the selected one of the object types in the edit area for allowing a user to create a customized image by editing the object image;
receiving data regarding the customized image from the electronic device; and
generating an order for requiring production of the object of the selected one of the object types based on the customized image, wherein the order requires producing the object of the selected one of the object types by producing a main body having the specific shape, and an attachment body having a pattern thereon representing the customized image and being attached to the main body.

In a further embodiment, the disclosure relates to the preceding embodiment of method, wherein the method further includes, after the step of receiving data regarding the customized image from the electronic device, steps of:
in response to user operation of a re-edit request for editing the customized image, determining whether the production of the object has already begun; and
when it is determined that the production of the object has not yet begun, enabling the electronic device to display the edit page and the customized image, wherein the customized image is displayed in the edit area.

In a further embodiment, the disclosure relates to at least one of the preceding embodiments of method, wherein the data regarding the customized image includes an instruction set associated with editing of the object image, and an identification code of the selected one of the object types, the method further includes reconstructing the customized image by:
reading image data of the selected one of the object types based on the identification code,
producing a corresponding image that is identical to an image of the selected one of the object types based on the image data, and
applying the editing of the object image on the corresponding image based on the instruction set.

In an embodiment, the disclosure relates to an electronic device for creating a customized object, the electronic device including a processor, a display and a communication unit communicating with a server, wherein the processor:
controls the display to display an edit page, the edit page including a type selection list that displays a number of different object types of an object to be customized, a design element list that displays a number of available design elements, and an edit area, each of the object types having a specific shape;
in response to a user selection of a selected one of the object types, controls the display to display an object image corresponding to the selected one of the object types in the edit area for allowing a user to create a customized image by editing the object image; and
in response to a user command indicating that editing of the object image has been completed, controls the communication unit to transmit data regarding the customized image to the server.

In a further embodiment, the disclosure relates to of the preceding embodiment of electronic device, wherein the edit page displayed by the display further includes a pattern selection list including a number of patterns that are applicable to the object image, the patterns including one of a default pattern and a pre-edited pattern that is created by an outside party.

In a further embodiment, the disclosure relates to at least one of the preceding embodiments of electronic device, wherein the edit page displayed by the display further includes a component selection list that includes a number of components that constitute the object.

In a further embodiment, the disclosure relates to at least one of the preceding embodiments of electronic device, wherein the processor further controls, in response to the user selection of the pre-edited object, the display to display a message associated with initiation of a payment to the outside party.

In a further embodiment, the disclosure relates to at least one of the preceding embodiments of electronic device, wherein the processor further controls the display to display a message for inquiring whether the user intends to publish the customized image for use by other parties.

In a further embodiment, the disclosure relates to at least one of the preceding embodiments of electronic device, wherein the processor further records an instruction set associated with the editing of the object image and an identification code of the selected one of the object types;
wherein the data regarding the customized image includes the instruction set and the identification code, which allow the server to reconstruct the customized image by reading image data of the selected one of the object types based on the identification code, producing a corresponding image that is identical to an image of the selected one of the object types based on the image data, and applying the editing of the object image on the corresponding image based on the instruction set.

In the description above, for the purposes of explanation, numerous specific details have been set forth in order to provide a thorough understanding of the embodiments. It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure . It should be further appreciated that in the description, various features are sometimes grouped together in a single embodiment, figure, or description thereof for the purpose of streamlining the disclosure and aiding in the understanding various inventive aspects, and that one or more features or specific details from one embodiment may be practiced together with one or more features or specific details from another embodiment, where appropriate, in the practice of the disclosure.

## Claims

1. A method for creating a customized object to be implemented using an electronic device (3) communicating with a server (2), the method **characterized by** steps of:
displaying an edit page, the edit page including a type selection list (51) that displays a number of different object types (6) of an object (1) to be customized, a design element list (54) that displays a number of available design elements, and an edit area (53), each of the object types (6) having a specific shape;
in response to a user selection of a selected one of the object types (6), displaying an object image (61) corresponding to the selected one of the object types (6) in the edit area (53) for allowing a user to create a customized image by editing the object image; and
in response to a user command indicating that editing of the object image has been completed, transmitting data regarding the customized image to the server (2);
further including a step of recording an instruction set associated with the editing of the object image and an identification code of the selected one of the object types;
wherein the data regarding the customized image includes the instruction set and the identification code, so as to allow the server to reconstruct the customized image by reading image data of the selected one of the object types based on the identification code, producing a corresponding image that is identical to an image of the selected one of the object types based on the image data, and applying the editing of the object image on the corresponding image based on the instruction set.

2. The method of Claim 1, **characterized in that** the edit page further includes a pattern selection list (52) including a number of patterns (7) that are applicable to the object image (61), the patterns (7) including one of a default pattern and a pre-edited pattern that is created by an outside party.

3. The method of Claim 2, **characterized in that** the edit page further includes a component selection list (50) that includes a number of components that constitute the object (1).

4. The method of any one of Claims 2 and 3, **characterized in that** the method further includes a step of in response to the user selection of the pre-edited object, displaying a message associated with initiation of a payment to the outside party.

5. The method of any one of Claims 1 to 4, **characterized in that** the server generates an order for requiring production of the object (1) of the selected one of the object types (6) based on the customized image.

6. The method of Claim 5, **characterized in that** the order requires producing the object (1) of the selected one of the object types (6) by producing a main body (11) having the specific shape, and an attachment body (12) having a pattern thereon representing the customized image and being attached to the main body (11).

7. The method of any one of Claims 1 to 6, **characterized in that** the data regarding the customized image includes image data that represent the customized image.

8. The method of any one of Claims 1 to 7, **characterized in that** the method further includes, after the step of transmitting data regarding the customized image to the server, steps of:
in response to user operation of a re-edit request for editing the customized image, transmitting the re-edit request to the server; and
in response to a concurring response from the server, displaying the edit page and the customized image, wherein the customized image is displayed in the edit area (53).

9. A method for creating a customized object to be implemented using a server (2) communicating with an electronic device (3), the method **characterized by** steps of:
transmitting data to the electronic device (3) for enabling the electronic device (3) to display an edit page, the edit page including a type selection list (51) that displays a number of different object types (6) of an object (1) to be customized, a design element list (54) that displays a number of available design elements, and an edit area (53), each of the object types (6) having a specific shape;
in response to a user selection of a selected one of the object types (6), transmitting data to the electronic device (3) for enabling the electronic device (3) to display an object image (61) corresponding to the selected one of the object types (6) in the edit area (53) for allowing a user to create a customized image by editing the object image;
receiving data regarding the customized image from the electronic device (3); and
generating an order for requiring production of the object (1) of the selected one of the object types (6) based on the customized image, wherein the order requires producing the object of the selected one of the object types (6) by producing a main body (11) having the specific shape, and an attachment body (12) having a pattern thereon representing the customized image and being attached to the main body (11).

10. The method of Claim 9, **characterized in that** the method further includes, after the step of receiving data regarding the customized image from the electronic device (3), steps of:
in response to user operation of a re-edit request for editing the customized image, determining whether the production of the object (1) has already begun; and
when it is determined that the production of the object (1) has not yet begun, enabling the electronic device (3) to display the edit page and the customized image, wherein the customized image is displayed in the edit area.

11. The method of any one of Claims 9 and 10, **characterized in that** the data regarding the customized image includes an instruction set associated with editing of the object image, and an identification code of the selected one of the object types, the method further including:
reconstructing the customized image by
reading image data of the selected one of the object types based on the identification code,
producing a corresponding image that is identical to an image of the selected one of the object types based on the image data, and
applying the editing of the object image on the corresponding image based on the instruction set.

12. An electronic device (3) for creating a customized object, including a processor (31), a display (32) and a communication unit (33) communicating with a server (2), **characterized in that** said processor (31):
controls said display (32) to display an edit page, the edit page including a type selection list (51) that displays a number of different object types (6) of an object (1) to be customized, a design element list (54) that displays a number of available design elements, and an edit area (53), each of the object types (6) having a specific shape;
in response to a user selection of a selected one of the object types (6), controls said display (32) to display an object image (61) corresponding to the selected one of the object types (6) in the edit area (53) for allowing a user to create a customized image by editing the object image (61);
in response to a user command indicating that editing of the object image (61) has been completed, controls said communication unit (33) to transmit data regarding the customized image to the server (2); and
records an instruction set associated with the editing of the object image (61) and an identification code of the selected one of the object types (6);
the data regarding the customized image including the instruction set and the identification code, which allow the server (2) to reconstruct the customized image by reading image data of the selected one of the object types (6) based on the identification code, producing a corresponding image that is identical to an image of the selected one of the object types (6) based on the image data, and applying the editing of the object image (61) on the corresponding image based on the instruction set.

13. The electronic device (3) of Claim 12, **characterized in that** the edit page displayed by said display (32) further includes a pattern selection list (52) including a number of patterns (7) that are applicable to the object image (61), the patterns (7) including one of a default pattern and a pre-edited pattern that is created by an outside party.

14. The electronic device (3) of Claim 13, **characterized in that** the edit page displayed by said display (32) further includes a component selection list (51) that includes a number of components that constitute the object (1).

15. The electronic device (3) of any one of Claims 13 and 14, **characterized in that** said processor (31) further controls, in response to the user selection of the pre-edited object, said display (32) to display a message associated with initiation of a payment to the outside party.
